# EUROPEAN PATENT SPECIFICATION

(11) **EP 2 360 487 B1**
(45) Date of publication and mention of the grant of the patent: **13.03.2019**
(21) Application number: 11151341.2
(22) Date of filing: 19.01.2011
(51) Int. Cl.: H02S 50/10

(54) **Model-based power estimation of photovoltaic power generation system**
Modellbasierte Leistungsschätzung eines photovoltaischen Stromerzeugungssystems
Estimation de la puissance à base de modèle de système de génération d'électricité photovoltaïque

(30) Priority: 22.01.2010 US 692425
(43) Date of publication of application: 24.08.2011
(73) Proprietor: General Electric Company, Schenectady, NY 12345 (US)
(72) Inventor: El-Barbari, Said Farouk Said, Niskayuna, NY 12309 (US); Roesner, Robert, Niskayuna, NY 12309 (US); Mayer, Oliver Gerhard, Niskayuna, NY 12309 (US)
(74) Representative: Brannen, Joseph Waclaw

(56) References cited:
- JP-A- 2000 040 838
- JP-A- 2003 197 945
- US-A1- 2006 085 167
- US-B1- 6 465 725
- US-B1- 7 432 488
- KNAUPP W ED - INSTITUTE OF ELECTRICAL AND ELECTRONICS ENGINEERS: "Power rating of photovoltaic modules from outdoor measurements", PROCEEDINGS OF THE PHOTOVOLTAIC SPECIALISTS CONFERENCE. LAS VEGAS, OCT. 7 - 11, 1991; [PROCEEDINGS OF THE PHOTOVOLTAIC SPECIALISTS CONFERENCE], NEW YORK, IEEE, US, vol. CONF. 22, 7 October 1991 (1991-10-07) , pages 620-624, XP010039290, DOI: DOI:10.1109/PVSC.1991.169285 ISBN: 978-0-87942-636-1
- JOYCE<A> A ET AL: "Modelling a PV system", RENEWABLE ENERGY, PERGAMON PRESS, OXFORD, GB, vol. 22, no. 1-3, 1 January 2001 (2001-01-01), pages 275-280, XP004214114, ISSN: 0960-1481, DOI: DOI:10.1016/S0960-1481(00)00031-8
- KATTAKAYAM T A ET AL: "Experimental investigation on a series-parallel cluster of photovoltaic panels", SOLAR ENERGY, PERGAMON PRESS. OXFORD, GB, vol. 61, no. 4, 1 October 1997 (1997-10-01), pages 231-240, XP004097233, ISSN: 0038-092X, DOI: DOI:10.1016/S0038-092X(97)00054-6

## Description

The subject matter disclosed herein relates generally to photovoltaic power generation systems, and more particularly to models to estimate the power output of photovoltaic power generation systems.

Solar energy conversion systems are used to covert solar energy into electrical energy. The solar energy conversion system may include photovoltaic modules. Photovoltaic modules include a group of photovoltaic cells, also referred to as solar cells that are connected in series or in parallel and are encapsulated in an environmentally protective laminate. The photovoltaic cells that are the basic building blocks of photovoltaic modules, convert solar radiation to electrical energy. Conversion of solar energy into electrical energy includes reception of light, such as sunlight, absorption of sunlight into the solar cell, generation and separation of positive and negative charges creating a voltage in the solar cell, and collection and transfer of electrical charges through a terminal coupled to the solar cell.

Individual photovoltaic modules may generate only a small amount of power, usually much less power than is required by most applications. Desired voltage and current for practical applications is realized by interconnecting a plurality of photovoltaic modules in series and/or in parallel. This matrix is generally referred to as a photovoltaic array, and can be used to generate electrical energy from solar radiation for a variety of applications.

Large-scale photovoltaic systems may generate 10 MW or more. These large-scale photovoltaic systems may include at least 50,000 photovoltaic modules. Power losses may occur within these photovoltaic systems due to a variety of reasons such as shading of the cells, string failure, or open fuses. The large number of photovoltaic modules within these systems makes determining the source of the power loss difficult. Monitoring each component of these systems may be costly. Thus, there is a need for a cost-effective way to identify power losses within these large-scale photovoltaic systems.

JP-A-2003/197945 concerns a photovoltaic power generating device, including a solar radiation sensor and a temperature sensor, which measures the temperature of solar cell modules. The measured solar radiation and temperature are used to calculate the theoretical generated energy, which is compared with the actual generated energy. A malfunction of the device can be identified and a warning issued.

JP-A-2000/040838 also concerns the detection of an abnormality in a solar power generating facility. In particular, an abnormality detector compares actual power generated by solar cells with a theoretical power, and may deliver an abnormality signal.

US-A-2006/085167 concerns the monitoring of the performance of a photovoltaic supply, by calculating a running performance signal using a radiance signal received from a sensing device.

The present invention provides a power management system as defined in appended claim 1, and a method for monitoring power generation as defined in appended claim 5.

Various features, aspects, and advantages of the present invention will become better understood when the following detailed description is read with reference to the accompanying drawings in which like characters represent like parts throughout the drawings, wherein:
FIG. 1 is a schematic diagram of a photovoltaic power generation system in accordance with certain embodiments of the technique disclosed herein;
FIG. 2 is a block diagram of the use of a model for estimating the power output of a photovoltaic system in accordance with certain embodiments of the technique disclosed herein;
FIG. 3 is a flow chart illustrating a method for monitoring power generation in accordance with certain embodiments of the technique disclosed herein; and
FIG. 4 is a flow chart illustrating a method for generating a model to estimate power generation in accordance with certain embodiments of the technique disclosed herein.

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements. Any examples of operating parameters and/or environmental conditions are not exclusive of other parameters/conditions of the disclosed embodiments.

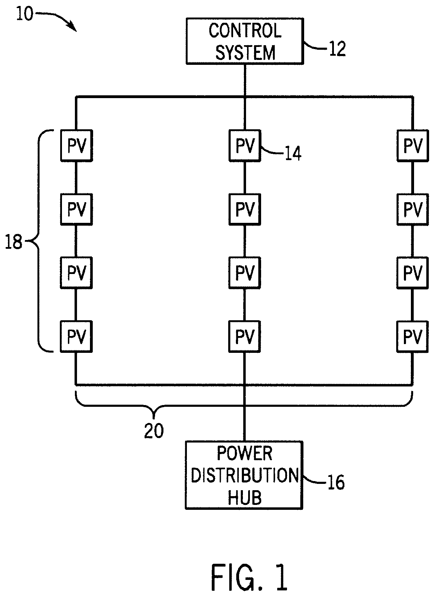

Turning now to the figures, FIG. 1 illustrates an embodiment of a photovoltaic power generation system 10. The photovoltaic power generation system 10 includes a control system 12, photovoltaic (PV) modules 14, and a power distribution hub 16. Each photovoltaic module 14 includes multiple interconnected cells. In the illustrated embodiment, the photovoltaic modules 14 are electrically connected in series to form a string 18. Multiple strings 18 are electrically connected to form a photovoltaic array 20. A photovoltaic power generation system 10 may include one or more photovoltaic arrays 20. A control system 12 regulates the photovoltaic arrays 20. In addition, the control system 12 also monitors the actual energy output of the photovoltaic arrays 20.

The control system 12 may include power conditioning and control equipment. The power conditioning equipment may include circuitry to follow the maximum power point of each photovoltaic array 20. The control system 12 may also include an inverter. In large-scale photovoltaic systems 10 each photovoltaic array 20 may have an inverter. The inverter converts the DC output of the photovoltaic array 20 to an AC output required by any load. The inverter may also include circuitry to follow the maximum power point of each photovoltaic array 20.

The electrical power generated by the photovoltaic arrays 20 is fed into a power distribution hub 16. The power distribution hub 16 may be or may connect to a utility grid. In one embodiment, the utility grid may feed power loads to the photovoltaic power generation system 10.

The actual obtainable power for a photovoltaic module 14 may be less than the theoretical obtainable power derived from the sum of all the cells within the module 14. Within each photovoltaic module 14 the actual obtainable power is dependent on numerous factors such as the types of cells within the module 14, the number of cells, and the type of interconnections between the cells. If all the cells are interconnected in series, the open circuit voltage of the module 14 is the sum of the voltages from the cells, and the short circuit current for the module 14 is equivalent to lowest cell short circuit current. If one cell operates at a lower current level, then all of the cells within the same string will operate at the lower current level and these cells would not reach the maximum power point. If all the cells are interconnected in parallel, the open circuit voltage of the module 14 is equivalent to the lowest cell open circuit voltage, and the short circuit current for the module 14 is the sum of the currents from the cells. If one cell operates at a lower voltage level, then all of the cells will operate below their maximum voltage point and these cells would also not reach the maximum power point. Due to mismatches between cells within the module 14 and overall series resistance the photovoltaic module 14 may function less efficiently than the cells within the module 14.

The output and efficiency of a module 14 may also be affected by climatic conditions such as the amount of incident irradiation or the ambient temperature, which may affect the operating temperature of the module 14. As the operating temperature increases the voltage of the module 14 decreases while the current slightly increases, thus the efficiency of the module 14 decreases as the temperature rises. The impact of rising temperatures on module efficiency varies and depends on the cell types and structures within a photovoltaic module 14.

Similarly, a photovoltaic array 20 may operate less efficiently than individual modules 14 within the array 20 due to similar factors. To maximize the output and efficiency of each photovoltaic array 20 the respective photovoltaic modules 14 should be well matched. The photovoltaic modules 14 may be interconnected in parallel, in series, or both to form the photovoltaic arrays 20. Interconnecting the photovoltaic modules 14 in parallel increases the current level. Interconnecting the photovoltaic modules 14 in series increases the voltage level. The type of interconnection between the photovoltaic modules 14 will depend on the current and voltage requirements of the load circuitry within the power distribution hub 16.

Other factors may affect the overall efficiency of the photovoltaic power generation system 10 or the individual arrays 20 such as shading, string failure, or open fuses. Shading on any part of a photovoltaic array 20 will reduce the output of the array 20. For example, a decrease in light intensity to a single photovoltaic module 14 due to shading will reduce the output of the module 14 and may also affect the output of the other modules 14 even if the other modules 14 are unshaded. The effect of shading on the array 20 will depend on the configuration of the electrical connections between the photovoltaic modules 14. For a string 18 of modules 14 connected in series, shading of a single photovoltaic module 14 within the string 18 will act as a load on the string 18 which may damage the string 18 due to heating caused by the current within the string 18. If the shading is severe enough to affect multiple modules 14, the open circuit voltage of the string 18 may be below the operating point of the array 20, and as a result, the string 18 may not contribute to the output of the array 20. Thus shading may disrupt the output of an array 20 in multiple ways: reduction in output from the shaded cells and modules 14, reduction in output from the unshaded modules 14 within a shaded string 18 due to the failure of the string 18 to maintain an operating voltage, and reduction in output from the rest of the array 20 due to all of the individual strings 18 of the array 20 not operating at maximum power.

String failure within an array 20 may occur for a number of reasons. For example, in a short circuit failure, a module 14 within a string 18 may be defective or an interconnection on the module 14 may be defective, thus the module 14 contributes no power to the string 18. The string 18 may then not be able to contribute full power to the photovoltaic array 20. In the case of an open circuit failure, the breaking of a wire connecting modules 14 within a string 18 may result in the complete loss of power from the string 18.

An open fuse within a string 18 may also lead to the string 18 not contributing power to the photovoltaic array 20. If the current running through a string 18 of modules 14 exceeds the maximum tolerable current level of the fuse, an open fuse results.

Determining the source of power loss in these large photovoltaic power generation systems 10 may be difficult. Large-scale photovoltaic power generation systems 10 may generate 10 MW or more. These large-scale photovoltaic systems may include 50,000 or more photovoltaic modules 14, multiple strings 18, and multiple arrays 20. Pinpointing the source and cause of specific power losses may prove costly and/or time consuming.

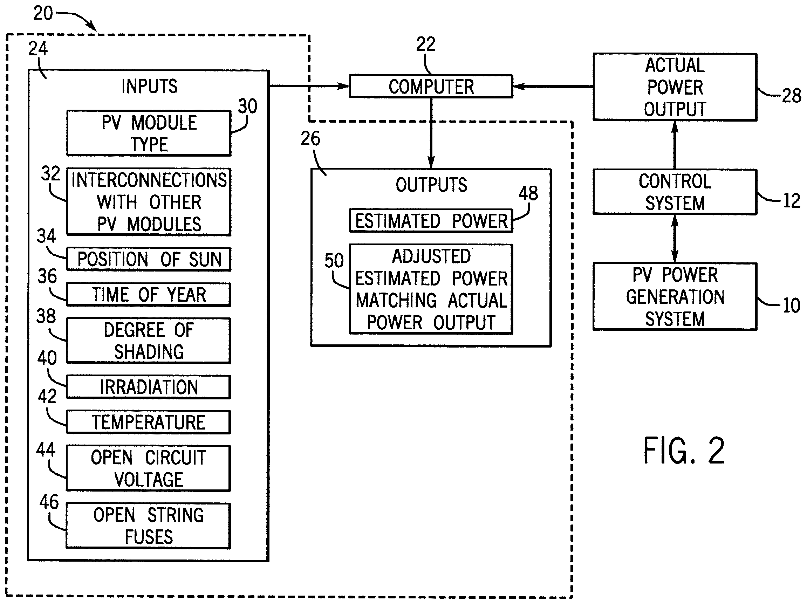

FIG. 2 illustrates an embodiment of the use of a model 20 for estimating the power output of a photovoltaic system 10. The model 20 may be implemented on or using a processor-based device or computer 22 to receive various inputs 24 to the model 20 and to generate outputs 26 based on the inputs 24. Certain of the inputs 24 may be known parameters stored within the memory of the computer 24. Inputs 24 may also come from sensors or equipment distributed throughout the photovoltaic power generation system 10. The model inputs 24 received by the computer 22 may include the photovoltaic module type 30 or the interconnections 32 of a particular photovoltaic module 14 with other photovoltaic modules 14. Additional inputs 22 may include the position of the sun 34, the time of year 36, the degree of shading 38, the irradiation levels 40, the temperature 42, open circuit voltage 44, and/or open string fuses 46. Other suitable inputs 24 affecting photovoltaic power generation may also be included.

The computer 22 may execute one or more algorithms pertaining to the model 20 to estimate the power output of a photovoltaic system 10. One such algorithm that may be implemented using computer 22 consists of steady state equations to take the inputs 24 and generate an estimated power output 48 for a single photovoltaic module 14. The estimated power output 48 of a single photovoltaic module 14 represents a theoretical local maximum power point within a photovoltaic system 10 based on the inputs 24. Additionally, the computer 22 may implement one or more other algorithms to generate an estimated power output 48 for the photovoltaic power generation system 10. Such a system level algorithm may take into account the estimated power outputs 48 for each module 14 and the overall structure of the photovoltaic system 10, among other factors. The estimated power output 48 for a photovoltaic system 10 represents a theoretical global maximum power point based on the inputs 24.

The actual power output measurement 28 of the photovoltaic system 10 (received form the control system 12) may be compared to the estimated power output 48 of the photovoltaic system 10, such as by computer 22. If the actual power output measurement 28 and the estimated power output 48 differ for the photovoltaic system 10, the computer 22 implements one or more additional algorithms to adjust the inputs 24, such as the degree of shading 38 or the open string fuses 46 with respect to one or more modules 14 or groups of modules 14. Based on the adjusted inputs 24 the algorithm generates an adjusted estimated power output 50 for the photovoltaic system 10 to match the actual power output measurement 28 of the photovoltaic system 10. The algorithm may generate multiple scenarios or instances of adjusted inputs 24 that substantially match the adjusted estimated power output 50 to the actual power output measurement 28 of the photovoltaic system 10.

Based on the scenarios generated by the model 20 sources for the power losses within the photovoltaic system 10 may be identified. For example, the model 20 may be used to identify an open string fuse within the photovoltaic system 10 by varying different values of the inputs 24 until an adjusted estimated power output 50 is modeled that corresponds to the actual power output 28. The inputs 24 that are varied to achieve an adjusted estimated power output 50 that corresponds to the actual power output 28 may then be determined and used to identify a power generation problem in a module 14, array 20, or system 10. The sources of the power loss may be confirmed by making physical adjustments to a module 14, string 18, or array 20 within the photovoltaic system 10, then monitoring the control system 12 for an improvement in actual power output 28 by the photovoltaic system 10. In large-scale photovoltaic systems 10, the model 20 may save money and reduce maintenance time.

The model 20 includes other benefits besides identifying potential sources of power loss within the photovoltaic system 10. The model 20 may also be useful in defining what the global maximum power point should be for the photovoltaic system 10 under particular climatic conditions and/or in the presence of multiple different local maximum power points identified within the system 10. For example, using inputs 24 such as the position of the sun 34, the time of the year 36, the degree of shading 38, the irradiation level 40, and the temperature 42, the model 20 may be used to identify the global maximum power point for the photovoltaic system 10 and/or to identify various local maximum power points within the system 10. In addition, the model 20 may be used to identify a global maximum power point when multiple local maximum power points are present that might otherwise make identification of the global maximum power point computationally difficult.

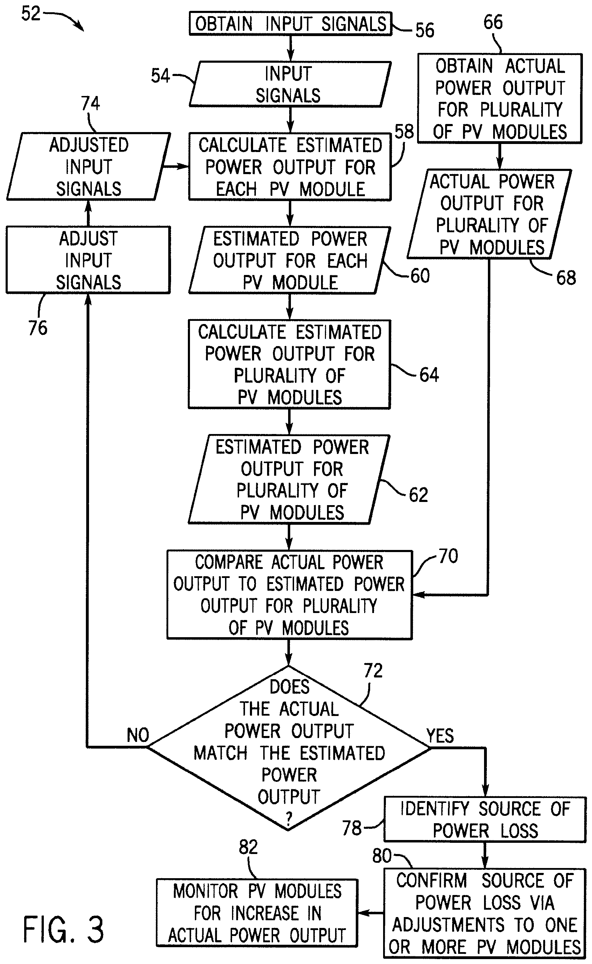

FIG. 3 is a flow diagram illustrating an embodiment of a method 52 for monitoring power generation. As illustrated, the method 52 comprises obtaining (block 56) input signals 54 related to photovoltaic power generation as described above. In one implementation, a processor-based system 22 calculates (block 58) an estimated power output 60 for each photovoltaic module 14 among a plurality of photovoltaic modules 14 based on the obtained input signals 54. An estimated power output 62 is then calculated (block 64) for the plurality of photovoltaic modules 14. The processor-based system 22 may obtain (block 66) an actual power output measurement 68 for the plurality of photovoltaic modules 14. The processor-based system 22 may compare (block 70) the actual power output measurement 68 of the plurality of photovoltaic modules 14 to the estimated power output 62 of the plurality of modules 14. In the depicted embodiment, the processor-based system 22 may decide (block 72) if the actual power output measurement 68 of the plurality of modules 14 actually matches (typically within some tolerance) the estimated power output 62. If the actual power output measurement 68 and the estimated power output 62 do not match, the processor-based system 22 may adjust (block 76) the input signals 74 and proceed with the adjusted input signals 74 to recalculate (block 58) the estimated power outputs 60 and 62. If the actual power output measurement 68 and the estimated power output 62 match, the potential source of any power loss within the plurality of photovoltaic modules 14 may be identified (block 78). Any potential source of power loss may be confirmed (block 80) by adjusting one or more of the plurality of photovoltaic modules 14 to address the identified problem. Upon making the adjustments, the plurality of photovoltaic modules 14 may be monitored (block 82) for an increase in actual power output 68.

The processor-based system 22, as mentioned above, may include or execute algorithms to calculate the estimated power 60 and 62 of a photovoltaic module 14 or a photovoltaic system 10 and to compare the actual power output measurement 68 of the photovoltaic system 10 to the estimated power output 62. In addition, the processor-based system 22 may include or execute an algorithm to adjust the input signals 54 until the estimated power output 62 matches the actual power output measurement 68 of the plurality of photovoltaic modules 14 or photovoltaic system 10.

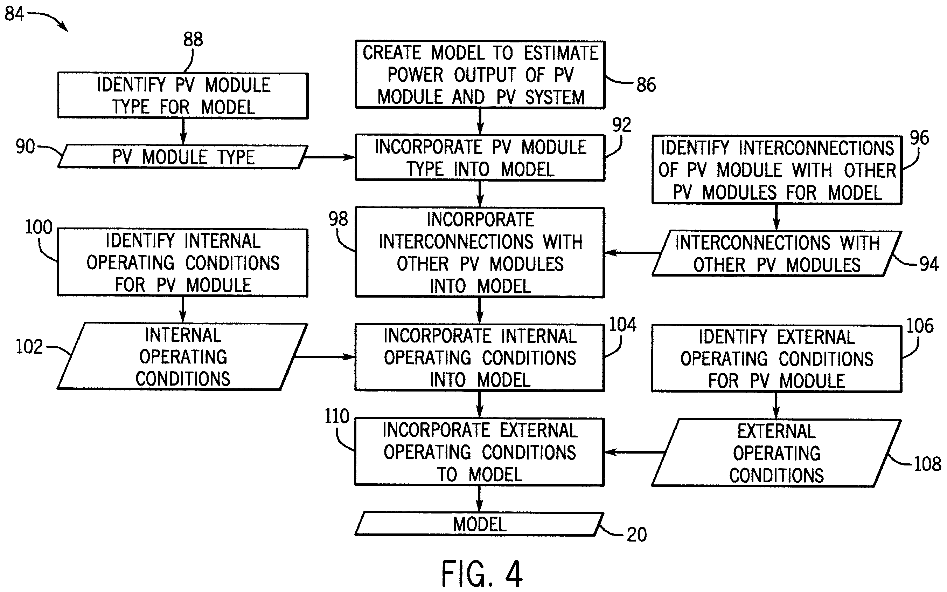

FIG. 4 is a flow diagram illustrating an embodiment of a method 84 for generating a model 20 to estimate power generation. As illustrated, the method 84 comprises creating (block 86) a model 20 to estimate the power output of a photovoltaic module 14 and photovoltaic system 10. In order to generate the model 20, one or more respective photovoltaic module types 90 are identified (block 88) for the model 20. The photovoltaic module types 90 are incorporated (block 92) into the model 20. In the depicted embodiment, interconnections 94 of a photovoltaic module 14 with other photovoltaic modules 14 are identified (block 96). Following identification, the interconnections 94 with other photovoltaic modules 14 are incorporated (block 98) into the model 20. In one implementation, various internal operating conditions 102 for the photovoltaic module 14 are identified (block 100). The internal operating conditions 102 may include any open string fuses 46 and/or the open circuit voltage 44, among other known conditions. Following identification, the internal operating conditions 102 are incorporated (block 104) into the model 20. Various external operating conditions 108 for the photovoltaic module 14 are identified (block 106). The external operating conditions 108 may include the position of the sun 34, the time of year 36, the degree of shading 38, the irradiation levels 40, and/or the temperature 42, among other relevant conditions. The external operating conditions 108 are then incorporated (block 110) into the model 20. Following incorporation of these various parameters into the model 20, the model 20 may be used to estimate the power output of a photovoltaic module 14 and/or system 10.

Technical effects of various of the above embodiments include the determination of the global maximum power point of a photovoltaic power generation system under different climatic and operating conditions using a model. The model, which may include one or more algorithms, may be implemented in a processor-based system where the processor-based system receives data from the power system. In addition, the model helps identify potential sources of power loss within large-scale photovoltaic systems. Use of the model may save money and reduce maintenance time, and subsequently increase the annual energy production of the photovoltaic system.

## Claims

1. A power management system, comprising:
a control system (12) configured to monitor the actual power output (28, 68) of a photovoltaic system (10) comprising one or more arrays (18) of photovoltaic modules (14) and to generate an actual power output measurement (28) of the photvoltaic system; and
a processor-based device (22) programmed with a model (20) for estimating power output of the one or more arrays of photovoltaic modules (14), and configured to:
receive input signals (24, 54) representing inputs (24) defined by the model (20), the inputs (24) corresponding to values of known parameters and/or measured parameters of the photovoltaic system (10);
use the model to calculate an estimated power output (60, 62) of the one or more arrays of photovoltaic modules (18) and of each of the photovoltaic modules (14) based on the input signals (54);
compare the estimated power output (62) for the one or more arrays of photovoltaic modules (18) to the generated actual power output measurement (28, 68) received from the control system (12);
repeatedly adjust the input signals (54), so as to vary values of the inputs (24) defined by the model (20) with respect to one or more photovoltaic modules or groups of modules and generate multiple scenarios/instances of adjusted input values (24) that achieve adjusted estimated power outputs (50) that match the actual power output measurement (28, 68) of the one or more arrays of photovoltaic modules (18); and
identifying a source of power loss within the photovoltaic system (10) based on scenarios/instances of the adjusted input values (24) generated by the model (20).

2. The power management system of claim 1, wherein the input signals (54) represent the position of the sun (34), degree of shading (38), amount of irradiation (40), temperature (42), open circuit voltage (44), time of year (36), physical connections between each photovoltaic module (32), and/or solar module type (30).

3. The power management system of any preceding claim, wherein the estimated power output (62) represents a global maximum power point determined where multiple different local maximum power points are present.

4. The power management system of any preceding claim, wherein the estimated power output (62) represents a global maximum power point determined for a specified degree of shading.

5. A method for monitoring power generation in a photovoltaic system (10) comprising one or more arrays (18) of photovoltaic modules (14), the method comprising:
receiving input signals (24, 54) representing inputs (24) defined by a model (20), the inputs (24) corresponding to values of known parameters and/or measured parameters of the photovoltaic system (10);
using a model to calculate an estimated power output (60, 62) of the one or more arrays of photovoltaic modules (18) and of each of the photovoltaic modules (14) based on the input signals (54);
comparing the estimated power output (62) for the one or more arrays of photovoltaic modules (18) to an actual power output measurement (28, 68) of the photovoltaic system (10);
repeatedly adjusting the input signals (54), so as to vary values of the inputs (24) defined by the model (20) with respect to one or more photovoltaic modules (14) or groups of modules (14);
generating multiple scenarios/instances of adjusted input values (24) that achieve adjusted estimated power outputs (50) that match the actual power output measurement (28, 68) of the one or more arrays of photovoltaic modules (18); and
identifying a source of power loss within the photovoltaic system (10) based on scenarios/instances of the adjusted input values (24) generated by the model (20).

6. The method for monitoring power generation of claim 5, further comprising:
obtaining the actual power output measurement (28, 68) for the plurality of photovoltaic modules (14).

## Patentansprüche

1. Leistungsmanagementsystem, umfassend:
ein Steuersystem (12), das eingerichtet ist, den tatsächlichen Leistungsausgang (28, 68) eines photovoltaischen Systems (10) zu überwachen, umfassend eine oder mehrere Anordnungen (18) photovoltaischer Module (14), und eine tatsächliche Leistungsausgangsmessung (28) des photovoltaischen Systems zu generieren; und
eine auf einem Prozessor basierende Vorrichtung (22), die mit einem Modell (20) zum Schätzen eines Leistungsausgangs der einen oder mehreren Anordnungen photovoltaischer Module (14) programmiert ist und eingerichtet ist zum:
Empfangen von Eingangssignalen (24, 54), die Eingänge (24) darstellen, die durch das Modell (20) definiert sind, wobei die Eingänge (24) Werten bekannter Parameter und/oder gemessener Parameter des photovoltaischen Systems (10) entsprechen;
Verwenden des Modells zum Berechnen eines geschätzten Leistungsausgangs (60, 62) der einen oder mehreren Anordnungen photovoltaischer Module (18) und jedes der photovoltaischen Module (14) basierend auf den Eingangssignalen (54);
Vergleichen des geschätzten Leistungsausgangs (62) für die eine oder mehreren Anordnungen photovoltaischer Module (18) mit der generierten tatsächlichen Leistungsausgangsmessung (28, 68), die vom Steuersystem (12) empfangen wird;
wiederholtes Einstellen der Eingangssignale (54), um so Werte der Eingänge (24), die durch das Modell (20) definiert sind, in Bezug auf ein oder mehrere photovoltaische Module oder Gruppen von Modulen zu variieren und mehrere Szenarien/Instanzen eingestellter Eingangswerte (24) zu generieren, die eingestellte geschätzte Leistungsausgänge (50) erzielen, die mit der tatsächlichen Leistungsausgangsmessung (28, 68) der einen oder mehreren Anordnungen photovoltaischer Module (18) übereinstimmen; und
Identifizieren einer Quelle eines Leistungsverlusts innerhalb des photovoltaischen Systems (10) basierend auf Szenarien/Instanzen der eingestellten Eingangswerte (24), die durch das Modell (20) generiert werden.

2. Leistungsmanagementsystem nach Anspruch 1, wobei die Eingangssignale (54) die Position der Sonne (34), den Verschattungsgrad (38), die Menge an Bestrahlung (40), die Temperatur (42), die Leerlaufspannung (44), die Jahreszeit (36), die physikalischen Verbindungen zwischen jedem photovoltaischen Modul (14) und/oder die Solarmodulart (30) darstellen.

3. Leistungsmanagementsystem nach einem der vorstehenden Ansprüche, wobei der geschätzte Leistungsausgang (62) einen globalen maximalen Leistungspunkt darstellt, der bestimmt wird, wenn mehrere verschiedene lokale maximale Leistungspunkte vorhanden sind.

4. Leistungsmanagementsystem nach einem der vorstehenden Ansprüche, wobei der geschätzte Leistungsausgang (62) einen globalen maximalen Leistungspunkt darstellt, der für einen spezifizierten Verschattungsgrad bestimmt wird.

5. Verfahren zum Überwachen einer Leistungsgenerierung in einem photovoltaischen System (10), umfassend eine oder mehrere Anordnungen (18) photovoltaischer Module (14), das Verfahren umfassend:
Empfangen von Eingangssignalen (24, 54), die Eingänge (24) darstellen, die durch ein Modell (20) definiert sind, wobei die Eingänge (24) Werten bekannter Parameter und/oder gemessener Parameter des photovoltaischen Systems (10) entsprechen;
Verwenden eines Modells zum Berechnen eines geschätzten Leistungsausgangs (60, 62) der einen oder mehreren Anordnungen photovoltaischer Module (18) und jedes der photovoltaischen Module (14) basierend auf den Eingangssignalen (54);
Vergleichen des geschätzten Leistungsausgangs (62) für die eine oder mehreren Anordnungen photovoltaischer Module (18) mit einer tatsächlichen Leistungsausgangsmessung (28, 68) des photovoltaischen Systems (10);
wiederholtes Einstellen der Eingangssignale (54), um so Werte der Eingänge (24), die durch das Modell (20) definiert sind, in Bezug auf ein oder mehrere photovoltaische Module (14) oder Gruppen von Modulen (14) zu variieren;
Generieren mehrerer Szenarien/Instanzen eingestellter Eingangswerte (24), die eingestellte geschätzte Leistungsausgänge (50) erzielen, die mit der tatsächlichen Leistungsausgangsmessung (28, 68) der einen oder mehreren Anordnungen photovoltaischer Module (18) übereinstimmen; und
Identifizieren einer Quelle eines Leistungsverlusts innerhalb des photovoltaischen Systems (10) basierend auf Szenarien/Instanzen der eingestellten Eingangswerte (24), die durch das Modell (20) generiert werden.

6. Verfahren zum Überwachen einer Leistungsgenerierung nach Anspruch 5, weiter umfassend:
Erhalten der tatsächlichen Leistungsausgangsmessung (28, 68) für die mehreren photovoltaischen Module (14).

## Revendications

1. Système de gestion de puissance , comprenant :
un système de commande (12) configuré pour surveiller la puissance de sortie réelle (28, 68) d'un système photovoltaïque (10) comprenant une ou plusieurs séries (18) de modules photovoltaïques (14) et pour générer une mesure de puissance de sortie réelle (28) du système photovoltaïque ; et
un dispositif sur la base d'un processeur (22) programmé avec un modèle (20) pour estimer une puissance de sortie de l'une ou plusieurs séries de modules photovoltaïques (14), et configuré pour :
recevoir des signaux d'entrée (24, 54) représentant des entrées (24) définies par le modèle (20), les entrées (24) correspondant aux valeurs de paramètres connus et/ou de paramètres mesurés du système photovoltaïque (10) ;
utiliser le modèle pour calculer une puissance de sortie estimée (60, 62) de l'une ou plusieurs séries de modules photovoltaïques (18) et de chacun des modules photovoltaïques (14) sur la base des signaux d'entrée (54) ;
comparer la puissance de sortie estimée (62) pour l'une ou plusieurs séries de modules photovoltaïques (18) à la mesure de puissance de sortie réelle générée (28, 68) reçue du système de commande (12) ;
ajuster de façon répétée les signaux d'entrée (54), de façon à faire varier des valeurs des entrées (24) définies par le modèle (20) par rapport à un ou plusieurs modules photovoltaïques ou groupes de modules et générer de multiples scénarios/ cas de valeurs d'entrée ajustées (24) qui atteignent des puissances de sortie (50) estimées ajustées qui correspondent à la mesure de puissance de sortie réelle (28, 68) de l'une ou plusieurs séries de modules photovoltaïques (18) ; et
identifier une source de perte de puissance dans le système photovoltaïque (10)
sur la base des scénarios/ cas des valeurs d'entrée ajustées (24) générées par le modèle (20).

2. Système de gestion de puissance selon la revendication 1, dans lequel les signaux d'entrée (54) représentent la position du soleil (34), un degré d'ombre (38), une quantité de rayonnement (40), une température (42), une tension de circuit ouvert (44), une époque de l'année (36), des connexions physiques entre chaque module photovoltaïque (14), et/ou un type de module solaire (30).

3. Système de gestion de puissance selon n'importe quelle revendication précédente, dans lequel la puissance de sortie estimée (62) représente un point de puissance maximale globale déterminé lorsque de multiples points de puissance maximale locale différents sont présents.

4. Système de gestion de puissance selon n'importe quelle revendication précédente, dans lequel la puissance de sortie estimée (62) représente un point de puissance maximale globale déterminé pour un degré d'ombre spécifié.

5. Procédé de surveillance de génération d'électricité dans un système photovoltaïque (10) comprenant une ou plusieurs séries (18) de modules photovoltaïques (14), le procédé comprenant :
la réception de signaux d'entrée (24, 54) représentant des entrées (24) définies par un modèle (20), les entrées (24) correspondant aux valeurs de paramètres connus et/ou de paramètres mesurés du système photovoltaïque (10) ;
l'utilisation d'un modèle pour calculer une puissance de sortie estimée (60, 62) de l'une ou plusieurs séries de modules photovoltaïques (18) et de chacun des modules photovoltaïques (14) sur la base des signaux d'entrée (54) ;
la comparaison de la puissance de sortie estimée (62) pour l'une ou plusieurs séries de modules photovoltaïques (18) à une mesure de puissance de sortie réelle (28, 68) du système photovoltaïque (10) ;
l'ajustement répété des signaux d'entrée (54), de façon à faire varier des valeurs des entrées (24) définies par le modèle (20) par rapport à un ou plusieurs modules photovoltaïques (14) ou groupes de modules (14) ;
la génération de multiples scénarios/cas de valeurs d'entrée ajustées (24) qui atteignent des puissances de sortie (50) estimées ajustées qui correspondent à la mesure de puissance de sortie réelle (28, 68) de l'une ou plusieurs séries de modules photovoltaïques (18) ; et
l'identification d'une source de perte de puissance dans le système photovoltaïque (10) sur la base des scénarios/ cas des valeurs d'entrée ajustées (24) générées par le modèle (20).

6. Procédé de surveillance de génération d'électricité selon la revendication 5, comprenant en outre :
l'obtention de la mesure de puissance de sortie réelle (28, 68) pour la pluralité de modules photovoltaïques (14).
